# EUROPEAN PATENT APPLICATION

(11) **EP 3 895 771 A1**
(43) Date of publication of application: **20.10.2021**
(21) Application number: 19896940.4
(22) Date of filing: 12.12.2019
(51) Int. Cl.: A63H 33/00, G06F 8/60

(54) **INFORMATION PROCESSING SYSTEM**

(30) Priority: 13.12.2018 JP 2018233734
(71) Applicant: Viviware Japan, Inc., Fukuoka 812-0012 (JP)
(72) Inventor: SHIMADA, Shozaburo, Fukuoka-shi, Fukuoka 812-0012 (JP); KAGAMI, Shota, Fukuoka-shi, Fukuoka 812-0012 (JP); KASHIMOTO, Kazutoshi, Fukuoka-shi, Fukuoka 812-0012 (JP); ITAMOTO, Shintaro, Fukuoka-shi, Fukuoka 812-0012 (JP); HAYASHI, Tomohiro, Fukuoka-shi, Fukuoka 812-0012 (JP); NII, Hideaki, Fukuoka-shi, Fukuoka 812-0012 (JP)
(74) Representative: Feller, Frank
(86) International application number: PCT/JP2019/048676
(87) International publication number: WO 2020/122171

(57) **Abstract**

An objective of the present invention is to provide a technology with which, when a hardware device is operated on the basis of a control program created by a program creation assistance device, an operation at a desirable response speed as, for example, a toy is possible, and an actual device of the hardware device can be independently driven. Provided is an information processing system comprising: a user terminal 1 which assists with the creation of a control program by a user command; basic cores 2-1, 2-2 comprising a function for communicating with each of function modules 3-1, 3-2 and a function for controlling each of the function modules 3-1, 3-2 on the basis of the control program; and the function modules 3-1, 3-2 comprising a function for communicating with the basic core 2-1 and a function for exercising a prescribed function. A control sending unit 104 of the user terminal 1 sends at least a portion of the control program to at least one of one or more of the basic cores 2-1, 2-2.

## Description

### TECHNICAL FIELD

The present invention relates to an information processing system.

### BACKGROUND ART

Conventionally, provision of assembling toys for the purpose of educating children has been wide spread, and a number of related techniques have been proposed (see, for example, Japanese Unexamined Patent Application, Publication No. H10-108985). For example, according to the technique described in Japanese Unexamined Patent Application, Publication No. H10-108985, there is provided an assembling block capable of constructing an assembling toy by simple wiring or programming. According to the technique described in Japanese Unexamined Patent Application, Publication No. H10-108985, even users of low age can construct an assembling toy without performing complicated work or operations.

Patent Document 1: Japanese Unexamined Patent Application, Publication No. H10-108985

### DISCLOSURE OF THE INVENTION

### Problems to be Solved by the Invention

However, in the technique of Japanese Unexamined Patent Application, Publication No. H10-108985 described above, each assembling block is merely controlled solely by the existing program, and the degree of freedom in operation and control of the assembling toy is limited. That is, for example, with only the technique of the Japanese Unexamined Patent Application, Publication No. H10-108985 described above, it is not possible to execute a process of creating a program by combining the respective functions of the respective assembling blocks. In other words, with only the technique of Japanese Unexamined Patent Application, Publication No. H10-108985 described above, it is necessary to produce a separate and complicated program in order to execute, for example, an advanced process of combining the respective functions of the assembling blocks.

Furthermore, regarding the degree of freedom in the operation and control of the assembling toy, assembling in wired connection is subjected to restriction for convenience of wiring, while assembling in wireless connection is subject to the restriction for the power consumption in high-speed communication. For example, in WLAN (Wi-Fi) which is an example of wireless type high-speed communication, there is a restriction due to the physical size of its circuit, and furthermore, the circuit itself is expensive, and thus it is difficult to adopt such a system. On the other hand, in assembling with a lower power wireless type connection, the communication rate is insufficient, or the communication interval is long (for example, 5 ms to 100 ms in BLE (Bluetooth Low Energy)). This makes the operation slow as a bottleneck, and thus, it is not preferable as a toy.

Furthermore, a device with a display screen tends to be expensive, and therefore, it is not desirable to incorporate it.

The present invention has been made in view of the above circumstances, and it is an object of the present invention to provide a technique which enables an operation at a preferred response speed as a toy, for example, and to independently drive an actual machine of a hardware device when a hardware device is operated based on a control program created by a program creation support device, by eliminating the need for communication between the program creation support device and each hardware device.

### Means for Solving the Problems

In order to achieve the above object, an information processing system according to one aspect of the present invention includes:
a program creation support device that supports creating a control program by a user command;
one or more first hardware devices that have a function of communicating with other hardware device and a function of controlling the other hardware device based on the control program; and
one or more second hardware devices as the other hardware device that have a function of communicating with the first hardware device and a function of fulfilling a predetermined function,
in which the program creation support device includes a control transmission unit that transmits at least a part of the control program to at least one of the first hardware devices.

### Effects of the Invention

According to the present invention, it is possible to provide a technique which enables an operation at a preferred response speed as a toy, for example, and to independently drive an actual device of a hardware device when a hardware device is operated based on a control program created by a program creation support device, by eliminating the need for communication between the program creation support device and each hardware device.

### BRIEF DESCRIPTION OF THE DRAWINGS

FIG. 1 is a block diagram showing the configuration of an information processing system according to an embodiment of the present invention;
FIG. 2 is a block diagram showing an example of a hardware configuration of a user terminal according to an embodiment of the present invention;
FIG. 3 is a block diagram showing an example of a hardware configuration of a basic core according to an embodiment of the present invention;
FIG. 4 is a block diagram showing an example of a hardware configuration of a functional module according to an embodiment of the present invention;
FIG. 5 is a diagram showing an example of a configuration in a state in which a basic core and a functional module are connected according to an embodiment of the present invention;
FIG. 6 is a functional block diagram showing a functional configuration example of the user terminal of FIG. 2, the basic core of FIG. 3, and the functional module of FIG. 4;
FIG. 7 is a state transition diagram showing a state transition related to a program creation process using an information processing system according to an embodiment of the present invention;
FIG. 8A shows an example of a screen actually displayed to the user in the program creation process using the information processing system according to an embodiment of the present invention;
FIG. 8B shows an example of a screen actually displayed to the user in the program creation process using the information processing system according to an embodiment of the present invention, and is a diagram differing from FIG. 8A;
FIG. 8C shows an example of a screen actually displayed to the user in the program creation process using the information processing system according to an embodiment of the present invention, and is a diagram differing from FIG. 8A and FIG. 8B;
FIG. 9A is a diagram showing an example of a corresponding relationship between a screen displayed to a user and actual control in the program creation process using the information processing system according to an embodiment of the present invention;
FIG. 9B is a diagram showing an example of a corresponding relationship between a screen displayed to a user and actual control in the program creation process using the information processing system according to an embodiment of the present invention, and is a diagram differing from FIG. 9A;
FIG. 9C is a diagram showing an example of a corresponding relationship between a screen displayed to a user and actual control in the program creation process using the information processing system according to an embodiment of the present invention, and is a diagram differing from FIG. 9A and FIG. 9B;

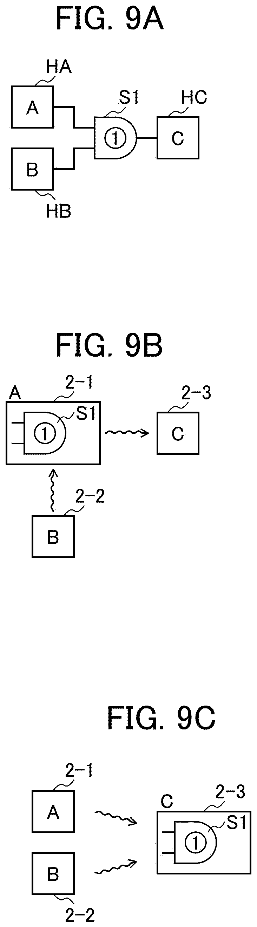

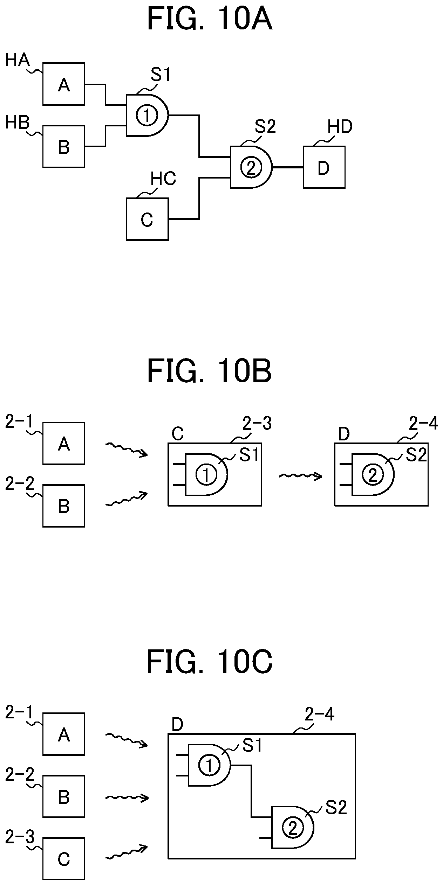

FIG. 10A is a diagram showing an example of a corresponding relationship between a screen displayed to a user and actual control in the program creation process using the information processing system according to an embodiment of the present invention, and is a diagram differing from each of FIGS. 9; FIG. 10B is a diagram showing an example of a corresponding relationship between a screen displayed to a user and actual control in the program creation process using the information processing system according to an embodiment of the present invention, and is a diagram differing from each of FIGS. 9 and differing from FIG. 10A;
FIG. 10C is a diagram showing an example of a corresponding relationship between a screen displayed to a user and actual control in the program creation process using the information processing system according to an embodiment of the present invention, and is a diagram differing from each of FIGS. 9 and differing from FIGS. 10A and 10B;
FIG. 11A is a diagram showing an example of a corresponding relationship between a screen displayed to a user and actual control in the program creation process using the information processing system according to an embodiment of the present invention, and is a diagram differing from each of FIGS. 9 and each of FIGS. 10;
FIG. 11B is a diagram showing an example of a corresponding relationship between a screen displayed to a user and actual control in the program creation process using the information processing system according to an embodiment of the present invention, and is a diagram differing from each of FIGS. 9 and each of FIGS. 10, and differing from FIG. 11A; and
FIG. 11C is a diagram showing an example of a corresponding relationship between a screen displayed to a user and actual control in the program creation process using the information processing system according to an embodiment of the present invention, and is a diagram differing from each of FIGS. 9 and each of FIGS. 10, and differing from FIG. 11A and FIG. 11B.

### PREFERRED MODE FOR CARRYING OUT THE INVENTION

Embodiments of the present invention will be described below with reference to the drawings.

The present invention is a creation of a technical idea for making a complicated program more easily by a user's visual operation. A user can create a program by operating various types of icons displayed on a user interface (hereinafter, referred to as a "program creation screen") displayed for program creation. More specifically, for example, the user can visually recognize an icon indicating the contents of a program that specifies the operation of specific hardware displayed on the program creation screen (hereinafter, referred to as "hardware part" or "H part") and an icon indicating the contents of a program that specifies the execution of specific software (hereinafter, referred to as "software part" or "S part"). Furthermore, the user arbitrarily moves these icons (for example, Drag and Drop, etc.) to create programs by combining various icons. The program thus created can be used, for example, in an assembling toy or the like. That is, since the information processing system according to an embodiment of the present invention can create a program by easy operations, it is extremely useful as a teaching material for allowing children to learn the mechanism and the creation method of the program.

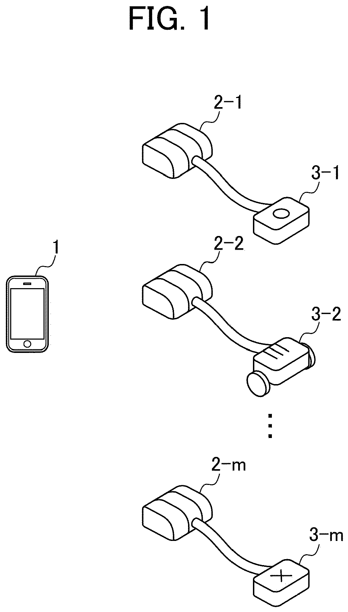

FIG. 1 is a block diagram showing the configuration of an information processing system according to an embodiment of the present invention. The information processing system shown in FIG. 1 includes a user terminal 1 used by the user, m basic cores 2-1 to 2-m (m is any integer value of 1 or more), and m functional modules 3-1 to 3-m. Furthermore, the user terminal 1 communicates with each of the basic cores 2-1 to 2-m in accordance with various types of schemes such as, for example, Near Field Communication (NFC (registered trademark)), Bluetooth (registered trademark) and the like. Hereinafter, when it is not necessary to distinguish each of the basic cores 2-1 to 2-m individually, they are referred to collectively as a "basic core 2", and when it is not necessary to distinguish each of the functional modules 3-1 to 3-m individually, they are referred to collectively as a "functional module 3".

Here, the basic core 2 and the functional module 3 used in the present embodiment are briefly described. The basic core 2 is a hardware device which is used in a state connected to the functional module 3 to be described later and performs pairing with the user terminal 1 by close-range wireless communication (for example, communication conforming to an NFC (registered trademark) standard). The user terminal 1 performs pairing with a predetermined basic core 2-K (K is an integer value out of 1 to m), and recognizes the basic core 2-K and a predetermined functional module 3-K connected with the basic core 2-K. The functional module 3-K is, for example, a hardware device constituted by various types of sensors such as a temperature sensor, an operation tool such as a buzzer, a driving tool such as a motor or a fan, or the like.

Here, the pairing between the user terminal 1 and the basic core 2-K as described above will be described. In the present embodiment, it is necessary to perform pairing for the user terminal 1 and the basic core 2-K using close-range wireless communication when a program associated with at least an operation of the functional module 3-K connected to the basic core 2-K is created. In short, the pairing indicates an operation of causing the user terminal 1 to recognize types, connection states, and the like of the basic core 2-K and the functional module 3-K connected to the basic core 2-K using close-range wireless communication. Furthermore, as will be described later in detail, in the user terminal 1, when the type, the connection state, or the like of the functional module 3-K is recognized, the H part corresponding to the connected functional module 3-K are displayed on the program creation screen.

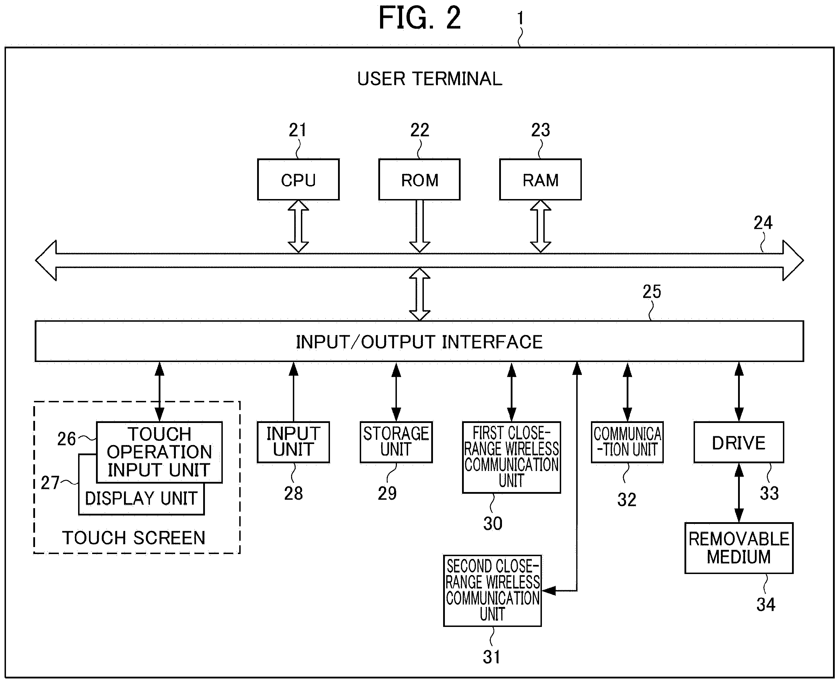

FIG. 2 is a block diagram showing a hardware configuration of the user terminal 1 according to an embodiment of the present invention.

The user terminal 1 is constituted by a tablet-type terminal or the like. The user terminal 1 includes a central processing unit (CPU) 21, read only memory (ROM) 22, random access memory (RAM) 23, a bus 24, an input/output interface 25, a touch operation input unit 26, a display unit 27, an input unit 28, a storage unit 29, a first close-range wireless communication unit 30, a second close-range wireless communication unit 31, a communication unit 32, a drive 33, and a removable medium 34.

The CPU 21 executes various types of processes in accordance with a program stored in the ROM 22 or a program loaded from the storage unit 29 onto the RAM 23. The RAM 23 appropriately stores information or the like necessary when the CPU 21 executes various types of processes.

The CPU 21, the ROM 22, and the RAM 23 are connected to one another via the bus 24. The input/output interface 25 is also connected to the bus 24. The touch operation input unit 26, the display unit 27, the input unit 28, the storage unit 29, the first close-range wireless communication unit 30, the communication unit 32, and the drive 33 are connected to the input/output interface 25. Furthermore, the second close-range wireless communication unit 31 is also provided.

The touch operation input unit 26 is constituted by, for example, a capacitive or resistive (pressure-sensitive) position input sensor laminated on the display unit 27, and detects coordinates of a position at which the touch operation is performed. The display unit 27 is constituted by a display such as a liquid crystal display, and displays various types of images such as images related to program creation. As described above, in the present embodiment, a touch panel is constituted by the touch operation input unit 26 and the display unit 27.

The input unit 28 includes various types of hardware or the like, and receives various types of information in accordance with an instruction operation of the user. The storage unit 29 is constituted by a hard disk, dynamic random-access memory (DRAM), or the like, and stores various types of information. The first close-range wireless communication unit 30 executes, for example, control such that close-range wireless communication is performed in accordance with a scheme conforming to the NFC (registered trademark) standard. More specifically, for example, as described above, the user terminal 1 and the basic core 2 perform close-range wireless communication in accordance to a scheme conforming to the NFC (registered trademark) standard, and perform pairing. The second close-range wireless communication unit 31 executes, for example, control such that close-range wireless communication is performed in accordance with a scheme conforming to the Bluetooth (registered trademark) standard. More specifically, for example, an execution result (including a command or the like) of the program created by the user terminal 1 is transmitted by the close-range wireless communication of the scheme conforming to the Bluetooth (registered trademark) standard. The communication unit 32 controls communication with other devices via the Internet or the like separately from and independently of the first close-range wireless communication unit 30 and the second close-range wireless communication unit 31.

The drive 33 is provided as necessary. The removable medium 34 constituted by a magnetic disk, an optical disk, a magneto-optical disk, semiconductor memory or the like is appropriately loaded into the drive 33. A program read from the removable medium 34 by the drive 33 is installed in the storage unit 29 if necessary. The removable medium 34 can also store various types of information stored in the storage unit 29, similarly to the storage unit 29.

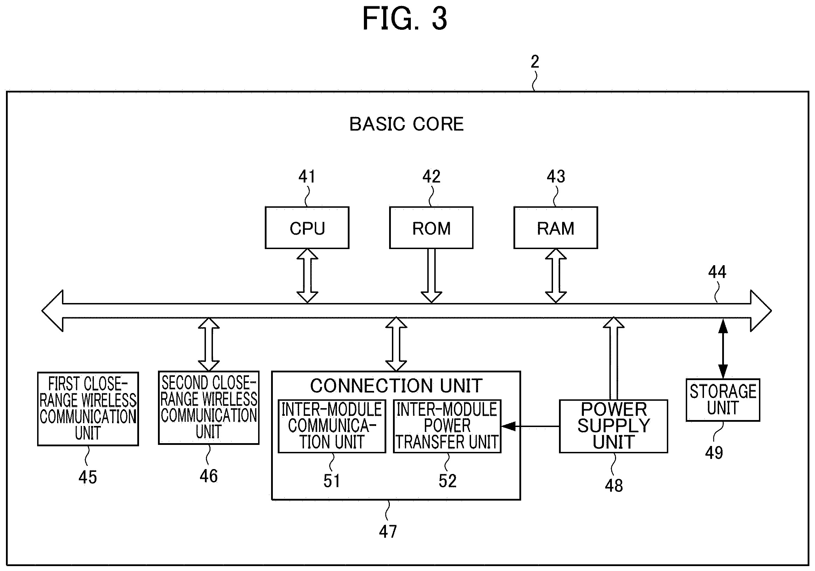

FIG. 3 is a block diagram showing a hardware configuration of the basic core 2 according to an embodiment of the present invention.

The basic core 2 is configured by a predetermined hardware device or the like. The basic core 2 includes a CPU 41, a ROM 42, a RAM 43, a bus 44, a first close-range wireless communication unit 45, a second close-range wireless communication unit 46, a connection unit 47, and a power supply unit 48.

Among the components of the basic core 2, the CPU 41, the ROM 42, the RAM 43, the bus 44, the first close-range wireless communication unit 45, and the second close-range wireless communication unit 46 are basically similar to the components of the user terminal 1, and thus descriptions thereof are omitted here.

The connection unit 47 establishes a connection with other hardware devices (for example, the functional module 3 in FIG. 1). Furthermore, the connection unit 47 includes an inter-module communication unit 51 and an inter-module power transfer unit 52. The inter-module communication unit 51 executes control such that data communication is performed, for example, in accordance with a scheme conforming to a local area network (LAN) standard. The inter-module power transfer unit 52 receives electric power supplied from the power supply unit 48 to be described later and transfers electric power to other hardware devices (for example, the functional module 3 in FIG. 1). The power supply unit 48 is a battery such as a battery cell. The power supply unit 48 supplies electric power to the basic core 2, and appropriately supplies electric power to the functional module 3 via the inter-module power transfer unit 52.

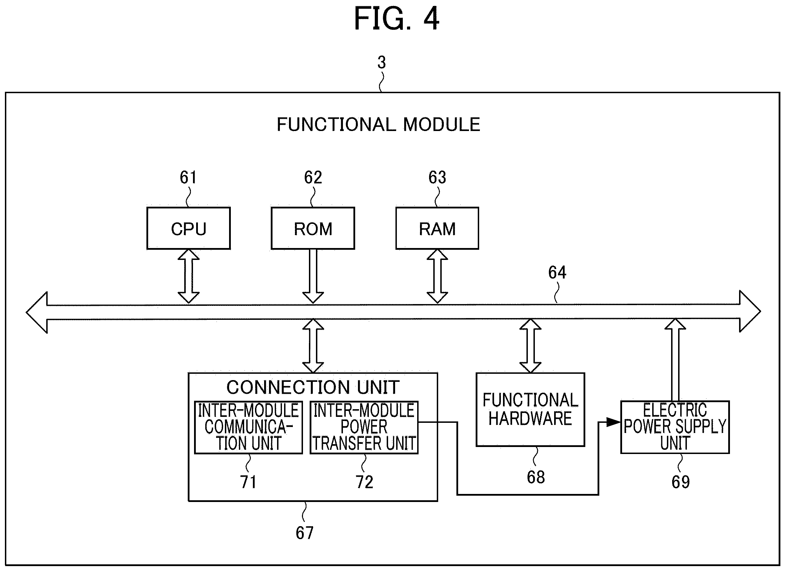

FIG. 4 is a block diagram showing a hardware configuration of the functional module 3 according to an embodiment of the present invention.

The functional module 3 is constituted by a predetermined hardware device or the like. The functional module 3 includes a CPU 61, ROM 62, RAM 63, a bus 64, a connection unit 67, functional hardware 68, and an electric power supply unit 69.

Among the components of the functional module 3, the CPU 61, the ROM 62, the RAM 63, the bus 64, and the connection unit 67 are basically similar to the components of the user terminal 1 or the basic core 2, and thus description thereof is omitted here. It should be noted that, a first close-range wireless communication unit and a second close-range wireless communication unit may be disposed in the functional module 3, similarly to the basic core 2.

The functional hardware 68 is, for example, a temperature sensor or a buzzer, and is hardware or the like that enables each functional module to fulfill its own function. That is, the program created by the user is reflected on actual hardware when the functional hardware 68 properly fulfills its function. Here, in the present embodiment, there are two types of execution methods as program execution. That is, a type virtually executing the program created by the user terminal 1 with only the user terminal 1 is referred to as "execution by simulation". On the other hand, a type causing the functional hardware 68 or the like to operate based on an execution result of the program created by the user terminal 1 is referred to as "execution by actual machine". Furthermore, for the "execution by actual machine", there are two methods including an execution method performing control based on the program created by the user terminal 1 by the user terminal 1 and an execution method performing the control based on the program created by the user terminal 1 by the one or more basic cores 2.

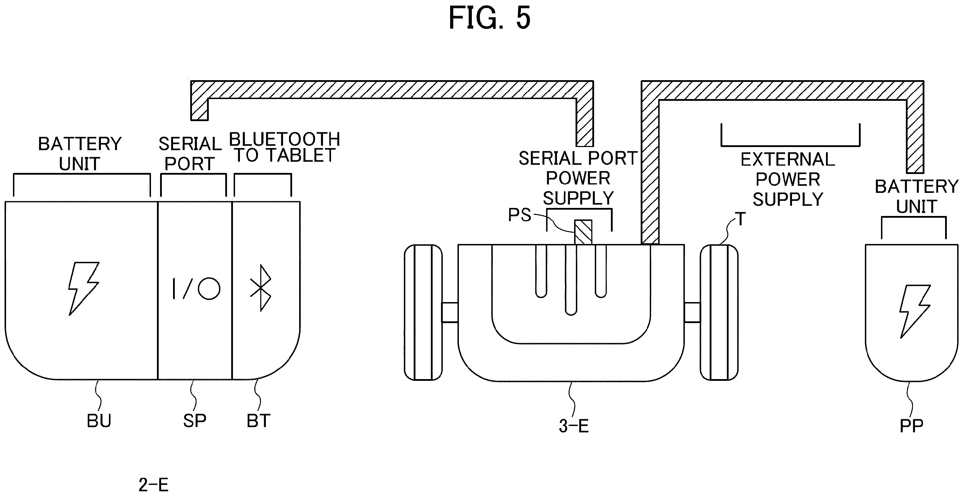

The electric power supply unit 69 supplies electric power obtained via an inter-module power transfer unit 72 or electric power supplied from an external power supply (for example, a battery unit PP in FIG. 5) to the functional module 3.

Next, a connection form of the basic core 2-E (E is an arbitrary integer value of 1 to m) and the functional module 3-E will be described in detail with reference FIG. 5. FIG. 5 is a diagram showing an example of a configuration in a state in which the basic cores 2-E and the functional modules 3-E are connected according to an embodiment of the present invention disclosure.

A basic core 2-E, a functional module 3-E, and a battery unit PP are illustrated in FIG. 5. The basic core 2-E includes a battery unit BU (for example, the power supply unit 48 of FIG. 3), a serial port SP, and a close-range wireless communication unit BT (for example, the second close-range wireless communication unit 46 of FIG. 3). The battery unit BU is, for example, a battery such as a battery cell, and supplies electric power to the basic core 2-E and the functional module 3-E. The serial port SP is a connection port (a connection connector) for connecting the basic core 2-E to other hardware or the like. In the example of FIG. 5, the basic core 2-E includes a serial port SP, and the functional module 3-E includes a serial port PS. Furthermore, the basic core 2-E and the functional module 3-E are connected via the two serial ports SP and PS. The close-range wireless communication unit BT is equipped with an IC card or the like for performing close-range wireless communication with other hardware or the like in accordance with a scheme conforming to a predetermined standard (for example, Bluetooth (registered trademark)). In the example of FIG. 5, the user terminal 1 (not shown in FIG. 5) and the basic core 2-E including the close-range wireless communication unit BT perform the close-range wireless communication in accordance with the scheme conforming to Bluetooth (registered trademark). More specifically, for example, an execution result (command or the like) of the program created on the user terminal 1 is also sent to the basic core 2-E. Furthermore, in the basic core 2-E, an execution result (a command or the like) of the program transmitted from the user terminal 1 is acquired, and the result is transmitted to the functional module 3-E. Alternatively, for example, the program created by the user terminal 1 is transmitted to the basic core 2-E and executed in the basic core 2-E. Furthermore, in the basic core 2-E, the program transmitted from the user terminal 1 is acquired, and the executed result (command or the like) is further transmitted to the functional module 3-E.

Also, the functional module 3-E is provided with a tire T (for example, functional hardware 68 in FIG. 4). Furthermore, as described above, the functional module 3-E acquires the execution result (command or the like) of the program transmitted from the basic core 2-E. The functional module 3-E in the example of FIG. 5 drives the tire T in accordance with the execution result (command or the like) of the program created by the user terminal 1. Here, in the example of FIG. 5, the battery unit PP is connected to the functional module 3-E. This battery unit PP supplies electric power to the functional module 3-E as an external power supply. It should be noted that, as described above, if it is possible to supply electric power to the functional module 3-E from the power supply unit 48 (FIG. 3) or the like of the basic core 2, the battery unit PP is not an essential component.

It is possible to execute a program creation process through the cooperation of various types of hardware and various types of software of the user terminal 1, the basic core 2, and the functional module 3. Here, the program creation process is a process for creating a program causing one or more functional modules 3 connected to the basic core 2 to function.

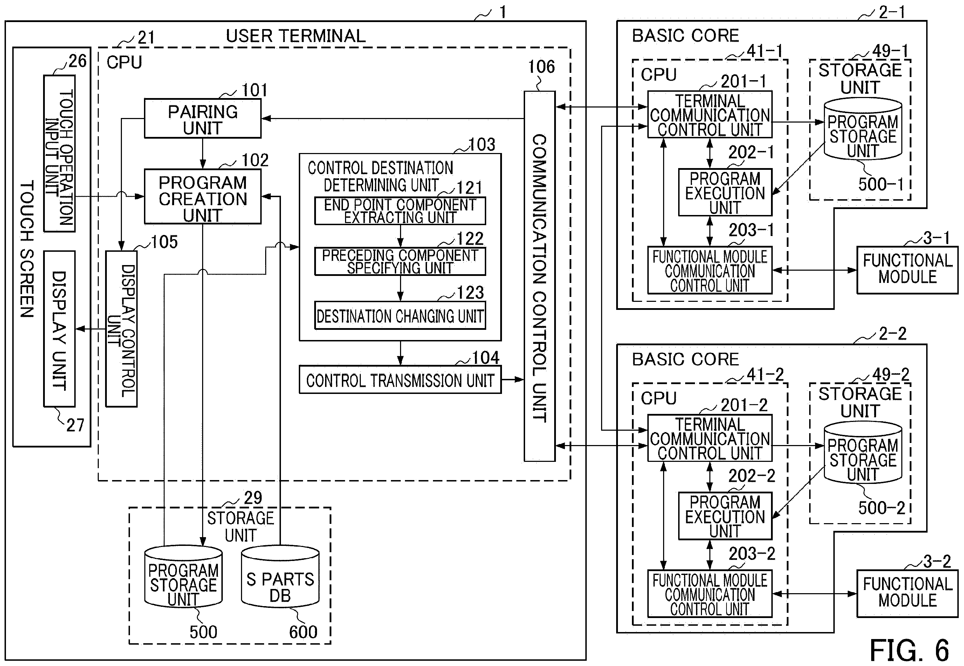

In order to realize the program creation process, the user terminal 1, the basic core 2, and the functional module 3 have the functional configurations shown in FIG. 6. FIG. 6 is a functional block diagram showing an example of the functional configurations of the user terminal 1, the basic core 2, and the functional module 3 of FIG. 1. As shown in FIG. 6, a pairing unit 101, a program creation unit 102, a control destination determining unit 103, a control transmission unit 104, a display control unit 105, and a communication control unit 106 function in the CPU 21 of the user terminal 1. Furthermore, a program storage unit 500 that stores a program created by the program creation unit 102 and a software parts database (S parts DB) 600 that stores various types of S parts are provided in an area of the storage unit 29 of the user terminal 1. Furthermore, a terminal communication control unit 201-1, a program execution unit 202-1, and a functional module communication control unit 203-1 function in the CPU 41-1 of the basic core 2-1. Here, a program storage unit 500-1 that stores programs received through the terminal communication control unit 201-1 is provided in an area of the storage unit 49-1 of the basic core 2-1. Furthermore, in the CPU 41-2 of the basic cores 2-2, the terminal communication control unit 201-2, the program execution unit 202-2, and the functional module communication control unit 203-2 function. Furthermore, in an area of the storage unit 49-2 of the basic core 2-2, a program storage unit 500-2 that stores programs received via the terminal communication control unit 201-2 is provided. Hereinafter, when it is not necessary to individually distinguish the respective configurations of the basic cores 2-1 and 2-2, these components are collectively referred to as "CPU 41", "storage unit 49", "terminal communication control unit 201", "program execution unit 202", "functional module communication control unit 203", and "program storage unit 500".

The pairing unit 101 of the user terminal 1 performs pairing between the user terminal 1 and the basic core 2 through the first close-range wireless communication unit 30. Although the pairing is performed by the close-range wireless communication conforming to the NFC (registered trademark) in the present embodiment, this is merely an example, and the pairing may be performed by communication of an arbitrary scheme. The pairing unit 101 checks types and connection states of the basic core 2 paired with the user terminal 1 and the functional module 3 connected thereto. It should be noted that the types and the connection states of the functional module 3 checked by the pairing unit 101 are displayed on the program creation screen via the display control unit 105.

The program creation unit 102 receives a touch operation by the user, and actually creates a program. Furthermore, the program creation unit 102 displays the H part corresponding to the type of the functional module 3 which is connected to the basic core 2 paired by the pairing unit 101 on the program creation screen via the display control unit 105. Furthermore, the program creation unit 102 appropriately extracts the S part from the S parts DB 600, and displays them on the program creation screen via the display control unit 105. Furthermore, the program creation unit 102 connects various H parts and various S parts according to the touch operation by the user. In the program to be finally created, the contents of the program designated for the various H parts and S parts connected in this manner may be continuously executed. Thereafter, the program creation unit 102 determines the contents of the program created by the user, and stores the created program in the program storage unit 500.

Based on a predetermined rule, the control destination determining unit 103 determines the first hardware device that transmits at least a part of the program stored in the program storage unit 500. That is, the control destination determining unit 103 extracts a program desired to be executed by the user from the programs stored in the program storage unit 500, applies a predetermined rule to the program, and determines the basic core 2 to which the control is to be sent and a part of the program to be sent.

Here, when an actual machine is configured by using one basic core 2, independent control becomes possible by determining the basic core 2 as a control destination, and signal transmission using close-range wireless communication becomes unnecessary for both the user terminal 1 and other devices, so that, for example, operation can be performed at a favorable response speed as a toy. However, in a case in which an actual machine is configured by using two or more basic cores 2, which one is to be the control destination becomes a problem. That is, since the central control by the user terminal 1 is not provided, each of the basic cores 2 needs to grasp the logic (a part of the program) related to itself, and each of them needs to be independently controlled.

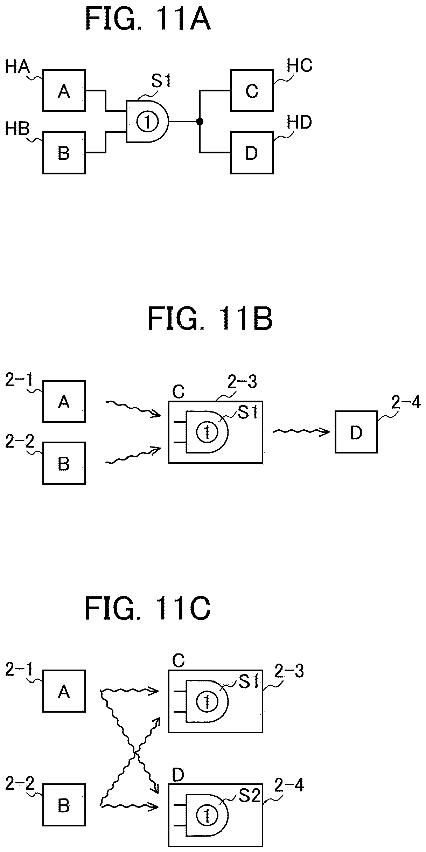

More specifically, it is desired to have an algorithm for optimizing the path of data from the start point to the end point of the logic, and optimizing which basic core 2 controls the logic (for example, NOT (reversal of signal) operation) of the S parts without hardware intervention, when there are two or more basic cores 2. As one measure of this, the basic core 2 at the last end point may acquire information on all of the start points related to the own machine, and the logic between the end point and the start point may all be processed by the basic core 2. By doing so, the data transmission path becomes the shortest. For example, in FIG. 11C described later, the same logical OR operation process is performed in both the basic core 2-3 and the basic core 2-4. As described above, the processing efficiency of the actual machine as a whole may be a trade-off. In addition, it is desirable that each of the basic cores 2 performs not only independent control, but also cooperation such as synchronization between the basic cores 2. This makes it possible to avoid various inconveniences.

Here, the control destination determining unit 103 is provided with an end point component extracting unit 121, a preceding component specifying unit 122, and a destination changing unit 123 in order to determine a first hardware device to which at least a part of the control program is transmitted based on a predetermined rule. The basic core 2 to which the control destination determining unit 103 sends control may be one, or two or more. This makes it possible to properly divide the control program and perform the processing, regardless of how many basic cores 2 are used to configure the actual machine.

The end point component extracting unit 121 analyzes the control program, and extracts programming components that do not send a signal to the other programming components as end point components. This makes it possible to trace the signal transmission path back from each of the endpoint components and to investigate the relationship with other programming components.

The preceding component specifying unit 122 specifies all of the programming components from each of the extracted end point components back to the start points thereof as the preceding components for the end point components. In this way, it is possible to identify, directly or indirectly, the programming component which transmit signals to the end point component to be processed. In addition, by doing so, it is possible to specify the relay portion of the signal transmission path.

The destination changing unit 123 changes, to the end point component, the destination of the signal in the control program of the preceding components for each of the end point components. By doing so, the transmission path of the signal can be reduced to only one step at most, thus reducing the time required for signal transmission. Along with this, since the execution result can be maintained by determining the control destination as the control destination determining unit 103 so that the basic core 2 for executing a necessary part of the program is of the end point component, for example, the toy according to the present invention can be correctly operated at a favorable response speed. It should be noted that "changing the destination" indicates not only replacing one existing destination with one new destination, but also adding a new destination while leaving the existing destination, or replacing two or more new destinations as shown in FIG. 11C to be described later.

The control transmission unit 104 transmits at least a part of the control program to at least one of the one or more first hardware devices. That is, the control transmission unit 104 transmits at least a part of the control program to the basic core 2 determined as the sending destination by the control destination determining unit 103 based on a predetermined rule. That is, the control transmission unit 104 generates and transmits at least a part of the control program by appropriately modifying the program stored in the program storage unit 500 that is desired to be executed by the user.

It should be noted that the user terminal 1 may virtually execute the extracted program without aiming at operating the basic core 2 and the functional module 3 by the program created by the user. That is, the user terminal 1 may be able to perform a simulation for checking whether or not the actually created program can be normally executed. It should be noted that the execution result of the program is displayed on the display unit 27 via the display control unit 105, as described later. Furthermore, the user terminal 1 may execute the extracted program for the purpose of operating the basic core 2 and the functional module 3 by the program created by the user. That is, the user terminal 1 may transmit the execution result (such as a command) of the created program to the basic core 2 and the functional module 3, and cause the functional module 3 to function. It should be noted that the execution result of the program may be not only displayed on the display unit 27 via the display control unit 105, but also transmitted to the basic core 2 by the communication control unit 106, as described later.

The display control unit 105 executes control for displaying the above-described various types of information and the like on the display unit 27.

The communication control unit 106 performs control or the like for realizing the transmission of at least a part of the control program by the control transmission unit 104 by transmitting to one or more basic cores 2 via the second close-range wireless communication unit 31. In addition, the communication control unit 106 may perform control or the like for transmitting the execution result of the program executed by the user terminal 1 to the basic core 2 via the second close-range wireless communication unit 31. It should be noted that, as described above, the second close-range wireless communication unit 31 performs close-range wireless communication by a method according to the Bluetooth (registered trademark) standard in the present embodiment.

The basic core 2 performs pairing with the user terminal 1 via the first close-range wireless communication unit 45. Here, the first close-range wireless communication unit 45 is independent of the system in the basic core 2. Therefore, the connection information (for example, MAC address) of the second close-range wireless communication unit 46 is written in advance in the first close-range wireless communication unit 45, and the basic core 2 reads the MAC address to realize the pairing with the user terminal 1 via Bluetooth (registered trademark); however, this is only an example, and reading the connection information may be performed in any method. That is, for the reading of the connection information in the pairing, it is possible to employ, for example, a combination of a camera and a QR code (registered trademark) a combination of a Hall sensor and a magnet, a combination of an acceleration sensor and a vibration motor, or the like.

The terminal communication control unit 201 executes, for example, control for acquiring a part of the program or an execution result of the program transmitted from the user terminal 1 via the second close-range wireless communication unit 46. In this case, for example, when the close-range wireless communication by BLE is employed, each basic core 2 may be a BLE server, and the user terminal 1 may be a BLE client to perform the close-range wireless communication. In addition, the terminal communication control unit 201 executes control or the like for communicating a signal or a program execution result from the functional module 3 with another basic core 2. In this case, for example, one BLE device (basic core 2) may be responsible for both the BLE server and the BLE client. That is, the relationship between the BLE server and the BLE client between the two basic cores 2 may be switched depending on the communication direction. In this case, two pairings are performed when the basic cores 2 are two, and six pairings are performed when the basic cores 2 are three.

In addition, data may be broadcasted by sending advertised packets in BLE. That is, data may be transmitted by inserting the destination information in the broadcast information, the basic core 2 as the recipient may be made to acquire only when it is addressed to itself, and the other information is discarded. In this case, it is desirable that the BLE broadcast can change the transmission interval up to several ms or less, and can dynamically change the transmission interval.

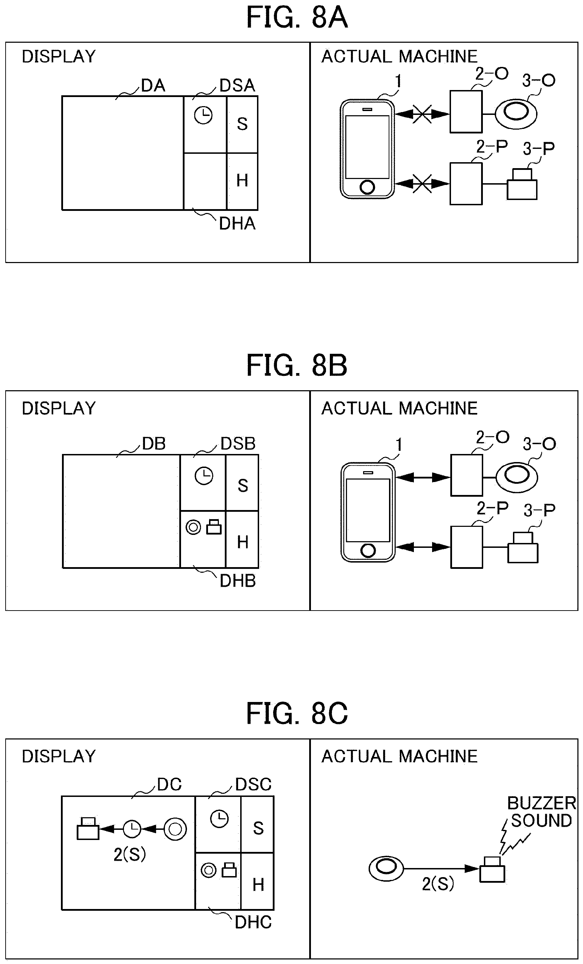

Here, when executing the program, the functional module 3 to perform the function of the program needs to be connected to a predetermined basic core 2. That is, at least during the execution of the program, the basic core 2 and the functional module 3 are connected by the connection unit 47 and the connection unit 67. Here, at least at the time of the execution of the program, the connection between the basic core 2 and the functional module 3 can be performed independently from the pairing of the basic core 2 and the user terminal 1. That is, the connection between the basic core 2 and the functional module 3 may be made before pairing, but the connection between the basic core 2 and the functional module 3 may also be made after pairing. In the latter case, by transmitting its own unique ID from the functional module 3 to the user terminal 1, the user terminal 1 can recognize what the functional module 3 is (what function is to be exhibited). The functional module 3 can also be removed from the basic core 2 after the pairing. In this case, the basic core 2 notifies the user terminal 1 that the functional module 3 is disconnected. The user terminal 1 performs display indicating that the user terminal 1 has been disconnected from the UI (a user display screen of FIG. 8A to FIG. 8C to be described later). More precisely, in the present embodiment, when a predetermined functional module 3 is removed from the basic core 2, the icon indicating the H part corresponding to the predetermined functional module 3 is hidden in the UI on the user terminal 1. In this manner, hot swap of the functional module 3 after pairing is realized. That is, for the user, once the pairing has been performed, only the removal and insertion of the functional module 3 with respect to the basic core 2 is necessary. The state of removal (disconnection)/insertion is also followed by the UI on the user terminal 1. In any case, when the basic core 2 and the functional module 3 are connected, the functional module communication control unit 203 of the basic core 2 executes control of communication with the functional module 3 connected via the connection unit 47. For example, the functional module communication control unit 203 transmits an operation command or the like outputted from the program execution unit 202, which will be described later, to the functional module 3.

The program execution unit 202 executes main control of various processes executed by the basic core 2. For example, the program execution unit 202 executes a part of the program acquired by the terminal communication control unit 201, and outputs an operation command or the like for causing the functional module 3 to perform the function based on the execution result.

It should be noted that the CPU 41 of the basic core 2 preferably includes an arithmetic processing capability that performs three operations in parallel in µ second order: exchanging data with the BLE interface in the terminal communication control unit 201; exchanging data with the functional module 3 in the functional module communication control unit 203; and processing of the logic in the program execution unit 202.

The functional module 3 executes the main control of various kinds of processing executed by the functional module 3. For example, the operation command transmitted from the basic core 2 is acquired via the connection unit 67.

The functional module 3 executes control for causing the functional hardware 68 to execute the acquired operation command. That is, the functional module 3 performs the function of the functional module 3 by causing the functional hardware 68 to execute the acquired operation command.

It should be noted that, although the electric power supply unit 69 supplies the power acquired through the inter-module power transfer unit 72 to the functional module 3, as described above, the power supplied from an external power supply (for example, the battery unit PP of FIG. 5) can also be supplied to the functional module 3.

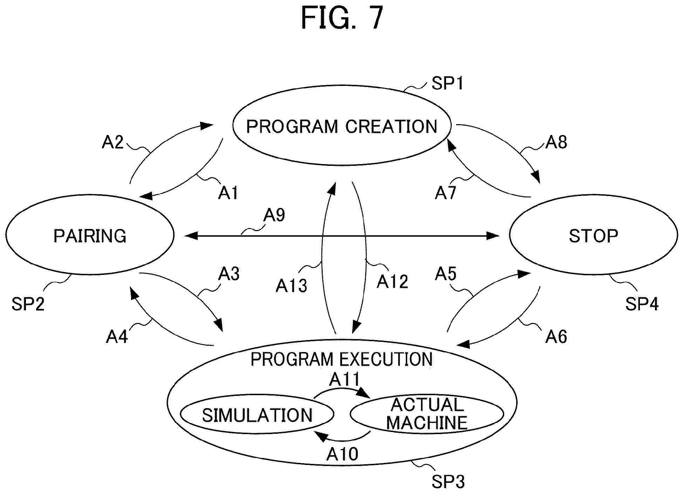

FIG. 7 is a state transition diagram showing a transition of states related to a program creation process using an information processing system according to an embodiment of the present invention. In FIG. 7, each state is indicated by one oval, and each state is determined by a reference numeral including SP. A state transition from one state to one state is executed when a predetermined condition (hereinafter referred to as a "state transition condition") is satisfied. In FIG. 7, such a state transition condition is indicated by adding a reference numeral including A to an arrow indicating a transition from one state to one state.

In the present embodiment, as shown in FIG. 7, a program creation state SP1 is a basic state. In the program creation state SP1, the user performs pairing by bringing the user terminal 1 and the basic core 2 close to each other. Here, "brought close" means bringing them close to each other up to a distance effective for performing the close-range wireless communication in accordance with the scheme conforming to the NFC (registered trademark) standard, generally, a distance of about 10 cm. That is, a state transition condition A1 is satisfied when the user brings the user terminal 1 and the basic core 2 close to each other up to a distance of about 10 cm. Then, the state transitions to a pairing state SP2. Thus, the program creation unit 102 displays the H part on the program creation screen via the display control unit 105. Then, after the pairing, when the user does not perform an operation for a certain period of time, a state transition condition A2 is satisfied. Thus, the state transitions to the program creation state SP1 again.

In the pairing state SP2, when the user depresses a predetermined operator (a program execution button or the like (not shown), a state transition condition A3 is satisfied. Then, the state transitions to a program execution state SP3. Then, similarly to the previous case, in the program execution state SP3, the user brings the user terminal 1 and the basic core 2 close to each other, so that a state transition condition A4 is satisfied. Then, the state transitions back to the pairing state SP2.

In the program creation state SP1, when the user finishes the creation of the program, and depresses a predetermined operator (program execution button not shown) for instructing execution of the program, a state transition condition A12 is satisfied. Then, the state transitions to the program execution state SP3. In program execution state SP3, when the user desires to add or change a program, if the user depresses a predetermined operator (the program creation button (not shown) or the like), a state transition condition A13 is satisfied. Then, the state transitions to the program creation state SP1.

Here, in the program execution state SP3, there are two states: a simulation state; and an actual machine state as described above. In the program execution state SP3, a state transition condition A10 or A11 in each state is satisfied when the user depresses a predetermined operator (a simulation button (not shown) or the like). As described above, in the program execution state SP3, the simulation state and the actual machine state can transition appropriately.

In the program execution state SP3, when the user depresses a predetermined operator (a program execution cancel button (not shown) or the like) after the program is executed, a state transition condition A5 is satisfied. Then, the state transitions to an idle state SP4. Then, in the idle state SP4, when the user depresses a predetermined operator (the program execution button (not shown) or the like), a state transition condition A6 is satisfied. Then, the state transitions to the program execution state SP3.

In the idle state SP4, when the user depresses a predetermined operator (an activation button of a program creation application (not shown) or the like), a state transition condition A7 is satisfied. Then, the state transitions to the program creation state SP1. Then, in the program creation state SP1, when the user depresses a predetermined operator (a program creation cancel button (not shown) or the like), a transition condition A8 is satisfied. Then, the state transitions to the idle state SP4. As shown in FIG. 7, direct transition to the pairing state SP2 and the idle state SP4 is also possible.

Next, the program creation screen displayed on the display unit 27 of the user terminal 1 will be described in detail with reference to FIGS. 8A to 8C. FIGS. 8A to 8C each relate to the program creation process executed by the user terminal 1 of FIG. 2, and are each a diagram showing an example of the screen actually displayed for the user.

In FIGS. 8A to 8C, the program creation screens displayed for the user (hereinafter referred to as a "user display screen") are illustrated in the left half portions, and schematic diagrams of various types of hardware operating in accordance with an actually produced program (hereinafter, referred to as a "hardware schematic diagram") are illustrated in the right half portions. First, FIG. 8A shows a situation in which the user terminal 1 is not paired with any basic core 2. That is, with reference to the hardware schematic diagram of FIG. 8A, both the basic core 2-O and the functional module 3-O (O is any integer value of 1 to m) and the basic core 2-P and the functional module 3-P (P is an integer value other than O among 1 to m) are not paired with the user terminal 1. It should be noted that the functional module 3-O can fulfill a function of a push button. Furthermore, the functional module 3-P can fulfill a function of a buzzer. Furthermore, with reference to the user display screen of FIG. 8A, no icon is displayed in a program creation display area DA and an H part display area DHA. Further, an icon of a timer is displayed in the S part display area DSA.

FIG. 8B shows a situation in which the user terminal 1 is paired with the basic core 2-O to which the functional module 3-O is connected, and the user terminal 1 is paired with the basic core 2-P to which the functional module 3-P is connected. Furthermore, with reference to the user display screen of FIG. 8B, the icon of the push button corresponding to the paired functional module 3-O and the icon of the buzzer corresponding to the functional module 3-P are displayed in the H part display area DHB.

FIG. 8C shows a situation in which the program created by the user is executed. With reference to the user display screen of FIG. 8C, the icon of the push button, the icon of the timer (2s), and the icon of the buzzer are displayed in the program creation display area DC in order from the right, and the respective icons are connected. As described above, the user can create one program by freely combining and connecting various types of H parts and various types of S parts and combining the contents designated by the respective icons while visually recognizing the icons displayed on the user display screen, and the user can execute the program. With reference to the hardware schematic diagram of of FIG. 8C, it is understood that, as a result of executing the program displayed on the user display screen of FIG. 8C, if the push button (the functional module 3-O) is depressed, an operation of sounding a buzzer (the functional module 3-P) is realized after two seconds.

The control based on the program displayed on the program creation screen by the user terminal 1 will be described in detail with reference to FIGS. 9A to 11C. FIG. 9A to FIG. 9C are diagrams each showing an example of a corresponding relationship between a screen displayed to the user and actual control in the program creation processing using the information processing system according to an embodiment of the present invention.

FIG. 9A is a schematic diagram of a program displayed on the program creation screen. In the program creation screen, as the H parts, icons of H part HA and H part HB, which are buttons, for example, are displayed on the left, and an icon of H part HC, which is an LED light, is displayed on the right. Between them, an icon of the logic circuit S1 is displayed as an S part. In the icon of the logic circuit S1, the icons of the H part HA and the H part HB are connected to the input side, and the icon of the H part HC is connected to the output side.

FIG. 9B is a schematic diagram of a first mode of control executed based on a program displayed on a program creation screen. Here, it is assumed that the basic core 2-1 is connected to the functional module 3 which is, for example, the push button A paired as the H part HA in the program creation screen. Similarly, it is assumed that the basic core 2-2 is connected to the functional module 3, which is, for example, a paired push button B as the H part HB, and the basic core 2-3 is connected to the functional module 3, which is, for example, a paired LED light C as the H part HC. Furthermore, here, the wavy line arrows among the basic cores 2 indicate the transmission direction of the signal by low-power close-range wireless communication (for example, BLE (Bluetooth Low Energy)).

The mode of the present control is that a signal is transmitted from the basic core 2-2 to the basic core 2-1, and signals from the H part HA and the H part HB are inputted to the logic circuit S1, which is, for example, an AND gate circuit, in the basic core 2-1, and the resulting signals are transmitted to the basic core 2-3. In this example, the LED light C emits light while the push button A and the push button B are pressed together based on the program. In this case, the basic core 2-1 may transmit the signal of the result of the logic circuit S1 to the basic core 2-3 as it is, thereby causing the basic core 2-3 to control the LED light C to emit light. Alternatively, the basic core 2-1 may also control the LED light C. That is, a signal for emitting the LED light C based on the result of the logic circuit S1 may be generated in the basic core 2-1 and transmitted to the basic core 2-3 to cause the LED light C to emit light.

FIG. 9C is a schematic diagram of a second mode of control executed based on the program displayed on the program creation screen. Here, the connections between the respective basic cores 2 and the functional modules 3 paired as the respective H parts are the same as those in FIG. 9B. The mode of the present control is that signals are transmitted from the basic core 2-1 and the basic core 2-2 to the basic core 2-3, and signals from the push button A and the push button B are inputted to the logic circuit S1, which is, for example, an AND gate circuit, in the basic core 2-3. In this example as well, the LED light C emits light while the push button A and the push button B are both pressed based on the program, as in the example of FIG. 9B. In the mode of the present control, the transmission path of the signals of the push button B to the basic cores 2-3 is shortened by one step as compared with the first mode shown in FIG. 9B. As a result, the time required for signal transmission is reduced, so that the toy operates at a favorable speed in the mode of the present control.

FIG. 10A to FIG. 10C are diagrams each showing an example of a corresponding relationship between a screen displayed to the user and actual control in the program creation processing using the information processing system according to an embodiment of the present invention, and differ from FIG. 9A to FIG. 9C. FIG. 10A is a schematic diagram of a program displayed on the program creation screen. In the program creation screen, as the H parts, icons of H part HA and H part HB, which are buttons, for example, are displayed on the left, and an icon of H part HD, which is an LED light, for example, is displayed on the right. Between them, for example, the H part HA, which is a button, and icons of a logic circuit S1 and a logic circuit S2 are displayed as the S parts. In the icon of the logic circuit S1, the icons of the H part HA and the H part HB are connected to the input side, and the icon of the logic circuit S2 is connected to the output side. In the icon of the logic circuit S2, the icon of the logic circuit S1 and the icon of the H part HC are connected to the input side, and the icon of the H part HD is connected to the output side.

FIG. 10B is a schematic diagram of a first mode of control executed based on a program displayed on a program creation screen. Here, it is assumed that the basic core 2-1 is connected to the functional module 3 which is, for example, the push button A paired as the H part HA in the program creation screen. Similarly, it is assumed that the basic core 2-2 is connected to the functional module 3 which is, for example, the push button B paired as the H part HB, the basic core 2-3 is connected to the functional module 3 which is, for example, the push button C paired as the H part HC, and the basic core 2-4 is connected to the functional module 3 which is, for example, the LED light D paired as the H part HD.

In the mode of the present control, signals are transmitted from the basic core 2-1 and the basic core 2-2 to the basic core 2-3, signals from the H part HA and the H part HB are inputted to the logic circuit S1, which is an AND gate circuit, for example, in the basic core 2-3, and the resulting signals and signals from the H part HC are transmitted to the basic core 2-4, and these are inputted to the logic circuit S2, which is an AND gate circuit, for example. In this example, the LED light D emits light while the push button A, the push button B, and the push button C are both pressed based on the program.

FIG. 10C is a schematic diagram of a second mode of control executed based on the program displayed on the program creation screen. The mode of the present control is an example in which the destination of a signal is replaced with two or more new destinations. Here, the connections between the respective basic cores 2 and the functional modules 3 paired as the respective H parts are the same as those in FIG. 10B. In the mode of the present control, signals are transmitted from the basic core 2-1, the basic core 2-2, and the basic core 2-3 to the basic core 2-4, and signals from the H part HA and the H part HB are inputted to the logic circuit S1, which is, for example, an AND gate circuit, in the basic core 2-4, and the resulting signals and signals from the H part HC are further inputted to the logic circuit S2, which is, for example, an AND gate circuit. In this example as well, the LED light D emits light while the push button A, the push button B, and the push button C are both pressed based on the program. In the mode of the present control, the transmission path of the signals of the push button A and the push button B to the basic cores 2-4 is shortened by one step as compared with the first mode shown in FIG. 10B. As a result, the time required for signal transmission is reduced, so that the toy operates at a favorable speed in the mode of the present control.

FIG. 11A to FIG. 11C are diagrams each showing an example of a corresponding relationship between a screen displayed to the user and actual controls in the program creation processing using the information processing system according to an embodiment of the present invention, and differ from FIG. 9A to FIG. 9C and FIG. 10A to FIG. 10C. FIG. 11A is a schematic diagram of a program displayed on the program creation screen. In the program creation screen, as the H parts, icons of H part HA and H part HB, which are buttons, for example, are displayed on the left, and icons of H part HC and H part HD, which are LED lights, are displayed on the right. Between them, an icon of the logic circuit S1 is displayed as the S part. In the icon of the logic circuit S1, the icons of the H part HA and the H part HB are connected to the input side, and the icons of the H part HC and the H part HD are connected to the output side.

FIG. 11B is a schematic diagram of a first mode of control executed based on a program displayed on a program creation screen. Here, it is assumed that the basic core 2-1 is connected to the functional module 3 which is, for example, the push button A paired as the H part HA in the program creation screen. Similarly, it is assumed that the basic core 2-2 is connected to the functional module 3 which is, for example, the push button B paired as the H part HB, the basic core 2-3 is connected to the functional module 3 which is, for example, the LED light C paired as the H part HC, and the basic core 2-4 is connected to the functional module 3 which is, for example, the LED light D paired as the H part HD.

In the mode of the present control, signals are transmitted from the basic core 2-1 and the basic core 2-2 to the basic core 2-3, and signals from the H part HA and H part HB are inputted to the logic circuit S1, which is, for example, an AND gate circuit, in the basic core 2-3, and the resulting signals are transmitted to the basic core 2-4. In this example, the LED light C and the LED light D emit light while the push button A and the push button B are both pressed based on the program. In this case, the basic core 2-3 may transmit the signal of the result of the logic circuit S1 to the basic core 2-4 as it is, thereby causing the basic core 2-4 to control the LED light C to emit light. Alternatively, the basic core 2-3 may also control the LED light D. That is, the signal for emitting the LED light D based on the result of the logic circuit S1 may be generated in the basic core 2-3, and transmitted to the basic core 2-4 to cause the LED light D to emit light.

FIG. 11C is a schematic diagram of a second mode of control executed based on the program displayed on the program creation screen. Here, the connections between the respective basic cores 2 and the functional modules 3 paired as the respective H parts are the same as those in FIG. 11B. In the mode of the present control, signals are transmitted from the basic core 2-1 and the basic core 2-2 to the basic core 2-3 and the basic core 2-4, in the basic core 2-3 and the basic core 2-4, and the signals from the push button A and the push button B are inputted to the logic circuit S1, which is, for example, an AND gate circuit. In this example as well, the LED light C and the LED light D will emit light while the push button A and the push button B are both pressed, as in the example of FIG. 11B, based on the program. In the mode of this control, the transmission path of the signals to the basic cores 2-4 is shortened by one step as compared with the first mode shown in FIG. 11B. As a result, the time required for signal transmission is reduced, so that the toy operates at a favorable speed in the mode of the present control.

Although the embodiments of the present invention have been described above, the present invention is not limited to the above-described embodiments, and variations, improvements, and the like within the scope capable of achieving the object of the present invention are included in the present invention.

For example, in the embodiment shown in FIGS. 8A to 8C, the push buttons and the buzzers are employed as the functional module 3-O and the functional module 3-P, but the function fulfilled by the functional module 3 is not particularly limited to the embodiments described above.

While the present invention may be embodied by the various embodiments described above, it is extremely useful in many embodiments to create programs for use in assembling toys, particularly for children's education. Since the icons displayed on the program creation screen can be visually checked, it is possible to safely and easily create a program even if the user is a child. In addition, since it is possible to cause the actual machine to operate in accordance with the program created by the user, children can enjoy creating programs without getting bored.

In this way, since the children can create programs while having fun, children can become familiar with programs that are generally difficult to access. Furthermore, if the basic core 2 and the user terminal 1 are paired, the functional module 3 can be freely attached and detached, and the state of attachment and detachment (removal) is also reflected on the program creation screen. Thus, children can also enjoy hardware design.

Here, the input/output information in the present embodiment will be described supplementarily. In the present embodiment, as various types of H parts or various types of S parts are combined, the contents of the program designated in various types of icons are continuously executed. For the input/output information of each program, not only as simple trigger information such as that shown in FIG. 8, but also as various types of information such as analog signals can be handled as the input/output information. That is, for example, for the input/output information in the present embodiment, information (for example, temperature is 15 degrees) acquired by a temperature sensor can be outputted as information such as an analog signal without change and used for program creation. Therefore, it is possible to realize even a complicated information process that is unable to be realized only with digital signal information.

Furthermore, for example, in the above-described embodiments, the pairing between the user terminal 1 and the basic core 2 is performed by the close-range wireless communication in accordance with a scheme conforming to the NFC (registered trademark) standard, but the present invention is not limited thereto. The pairing may be performed by any means, which is not limited to the close-range wireless communication. Furthermore, in the above-described embodiments, the execution result of the program created in the user terminal 1 is transmitted using the close-range wireless communication in accordance with a scheme conforming to the standard such as Bluetooth (registered trademark), but the present invention is not particularly limited thereto. The created program may be transmitted using any means which is not limited to the close-range wireless communication.

Furthermore, for example, in the above present embodiment, although the number of basic cores 2 and the number of functional modules 3 are both described as being m, the present invention is not particularly limited thereto. That is, the number of basic cores 2 and the number of functional modules 3 may be the same or different. That is, s number of (s is an arbitrary integer value of 1 or more) functional modules 3 may be connected to a single basic core 2.

Also, for example, the series of processes described above can be executed by hardware or software. In other words, the functional configuration of FIG. 6 is merely illustrative and not particularly limited. That is, it is sufficient if the information processing system has a function capable of executing a series of processes described above as a whole, and the functional block used to realize this function is not particularly limited to the example of FIG. 4. Also, the locations of the functional blocks are not particularly limited to those in FIG. 6 and may be arbitrary. Also, one functional block may be constituted by hardware alone, software alone, or a combination thereof.

Also, for example, when a series of processes is executed by software, a program that configures the software is installed in a computer or the like from a network or a recording medium. The computer may be a computer incorporated into dedicated hardware. Also, the computer may be a computer capable of executing various types of functions in accordance with various types of programs installed therein, for example, a general-purpose smartphone or a personal computer in addition to a server.

Also, for example, a recording medium including such a program is not only configured by a removable medium (not shown) which is distributed separately from a device main body to provide the program to the user, but also configured by a recording medium or the like provided to the user in a state in which it is incorporated into the device main body in advance.

It should be noted that, in the present disclosure, steps of describing the program recorded in the recording medium are not limited to processes which are performed chronologically in accordance with the order, but include processes which are not necessarily chronologically executed but executed in parallel or individually. Furthermore, in the present disclosure, a term "system" refers to the entire device constituted by a plurality of devices, a plurality of means, or the like.

In other words, the information processing system to which the present invention is applied can have various forms of embodiments having the following configuration. That is, the information processing system to which the present invention is applied preferably includes:
a program creation support device (for example, the user terminal 1 of FIG. 1) that supports creating a control program (for example, the program stored in the program storage unit 500 of FIG. 6) by a user command;
one or more first hardware devices (for example, the basic core 2 of FIG. 1) that have a function of communicating with other hardware device and a function of controlling the other hardware device based on the control program; and
one or more second hardware devices (for example, the functional module 3 of FIG. 1) as the other hardware device that have a function of communicating with the first hardware device and a function of fulfilling a predetermined function, the program creation support device includes a control transmission unit (for example, the control transmission unit 104 of FIG. 6) that transmits at least a part of the control program to at least one of the first hardware devices. With such a configuration, it is possible to enable operation at a preferred response speed as a toy, for example, and
independently drive an actual machine of a hardware device, since, when a hardware device is operated based on a control program created by a program creation support device, the need for communication between the program creation support device and each hardware device is eliminated.

### EXPLANATION OF REFERENCE NUMERALS

- 1.: user terminal,
- 2.: basic core,
- 3.: functional module,
- 21.: CPU,
- 27.: display unit,
- 30.: first close-range wireless communication unit,
- 31.: second close-range wireless communication unit,
- 41.: CPU,
- 45.: first close-range wireless communication unit,
- 46.: second close-range wireless communication unit,
- 47.: connection unit,
- 48.: power supply unit,
- 51.: inter-module communication unit,
- 52.: inter-module power transfer unit
- 61.: CPU
- 67.: connection unit,
- 68.: functional hardware,
- 69.: electric power supply unit,
- 71.: inter-module communication unit,
- 72.: inter-module power transfer unit,
- 101.: pairing unit,
- 102.: program creation unit,
- 103.: control destination determining unit,
- 104.: control transmission unit,
- 105.: display control unit
- 106.: communication control unit,
- 121.: end point component extracting unit,
- 122.: preceding component specifying unit,
- 123.: destination changing unit,
- 201.: terminal communication control unit,
- 202.: program execution unit,
- 203.: functional module communication control unit,
- 500.: program storage unit,
- 600: S parts DB

## Claims

1. An information processing system comprising:
a program creation support device that supports creating a control program by a user command;
one or more first hardware devices that have a function of communicating with other hardware device and a function of controlling the other hardware device based on the control program; and
one or more second hardware devices as the other hardware device that have a function of communicating with the first hardware device and a function of fulfilling a predetermined function,
wherein the program creation support device includes a control transmission unit that transmits at least a part of the control program to at least one of the first hardware devices.

2. The information processing system according to claim 1, wherein the program creation support device further includes a control destination determining unit that determines a first hardware device, among the one or more first hardware devices, to which at least the part of the control program is transmitted based on a predetermined rule.

3. The information processing system according to claim 2, wherein the control program is defined by connecting programming components including hardware components accosiated with the second hardware devices, and
wherein the control destination determining unit further includes:
an end point component extracting unit that analyzes the control program and extracts, as end point components, programming components that do not send a signal to other programming components;
a preceding component specifying unit that specifies all of the programming components from each of the end point components extracted back to start points thereof as preceding components for the end point components; and
a destination changing unit that changes a destination of a signal in the control program of the preceding component for each of the end point components, to the end point component.
